# EUROPEAN PATENT APPLICATION

(11) **EP 4 704 114 A1**
(43) Date of publication of application: **04.03.2026**
(21) Application number: 24202411.5
(22) Date of filing: 25.09.2024
(51) Int. Cl.: G21B 1/05, G21B 1/11, G21B 1/17, G21B 1/25

(54) **STELLARATOR WITH PLASMA VESSEL INTERFACE**

(30) Priority: 30.08.2024 US 202463688883 P
(71) Applicant: Proxima Fusion GmbH, 81369 München (DE)
(72) Inventor: TODD, Tom, Wantage, Oxfordshire OX12 9YE (GB); KUBIE, Martin, San Francisco, CA 94114 (US); MIDDLETON-GEAR, David, East Hanney, Oxfordshire OX12 0JN (GB); GUO, Wei, 880689 München (DE)
(74) Representative: Bardehle Pagenberg Partnerschaft mbB Patentanwälte Rechtsanwälte

(57) **Abstract**

The present disclosure relates to a stellarator (1) comprising: a plasma vessel (10); a plurality of non-planar, superconducting coils (20) for generating a magnetic field for confining a plasma inside the plasma vessel; a plurality of stellarator modules (8), each stellarator module comprising a plasma vessel segment (10a, 10b) and a corresponding subset of the plurality of non-planar, superconducting coils; wherein neighboring stellarator modules are configured to be coupled to each other via a corresponding plasma vessel interface (30); wherein the plasma vessel interfaces are positioned with respect to the plurality of non-planar, superconducting coils such that at least one of the stellarator modules can be replaced with a replacement stellarator module to restore the plasma vessel and the plurality of coils.

## Description

### FIELD OF THE INVENTION

The present disclosure relates to the field of nuclear fusion devices, specifically to a system and method for the modular construction and maintenance of stellarators. In particular, the present disclosure pertains to the construction and operation of stellarators with replaceable modules, as well as a method for stellarator waste management and a respective stellarator waste management plant.

### BACKGROUND

In the field of plasma confinement for nuclear fusion, stellarators are a prominent type of device utilized to maintain the stability and confinement of high-temperature plasma. Stellarators are particularly valued for their ability to maintain steady-state plasma confinement without the need for external current drive, which is a significant advantage over other fusion devices such as tokamaks. Stellarators employ complex magnetic fields generated by a series of non-planar magnetic coils to confine the fusion plasma in a toroidal plasma vessel, thereby facilitating the necessary conditions for nuclear fusion reactions. These non-planar magnetic coils are intricately designed to produce a twisted magnetic field that prevents plasma instabilities.

The construction and maintenance of stellarators present numerous challenges.

One common challenge in existing stellarator designs is the difficulty associated with maintenance and component replacement. Some traditional stellarators are constructed as monolithic structures, making it exceedingly difficult to access and replace individual components without significant disassembly of the entire device. This results in extended downtime and increased operational costs, particularly when dealing with the superconducting coils and the plasma vessel. According to known approaches, any failure or degradation in the superconducting coils or plasma vessel often necessitates the removal of large sections of the device, which is both time-consuming and labor-intensive.

Additionally, the intricate design of the coils and their proximity to the plasma vessel complicate the replacement process, as precise alignment and positioning are critical for the proper functioning of the stellarator.

Furthermore, the management of radioactive waste generated during the operation and maintenance of stellarators poses a significant challenge. Components exposed to the plasma become activated and require careful handling and disposal. Known systems lack efficient methods for segregating reusable components from those that must be processed as radioactive waste. This inefficiency not only increases the operational costs but also raises safety concerns associated with the handling and disposal of radioactive materials. Despite the substantial advances in the field of stellarator design and operation, there remains a need for improved methods and systems that facilitate easier maintenance, component replacement, and effective radioactive waste management.

Against this background, an object underlying the present disclosure is to provide a stellarator that at least partially overcomes the disadvantages of conventional systems.

### SUMMARY

These and other objects, which become apparent from the following description, are addressed by the subject-matter of the independent claims. Preferred embodiments are subject of the dependent claims, and other suitable embodiments are provided exemplarily throughout the disclosure of the present application.

A first aspect of the present disclosure provides a stellarator comprising: a plasma vessel; a plurality of non-planar, superconducting coils for generating a magnetic field for confining a plasma inside the plasma vessel; a plurality of stellarator modules, each stellarator module comprising a plasma vessel segment and a corresponding subset of the plurality of non-planar, superconducting coils; wherein neighboring stellarator modules are configured to be coupled to each other via a corresponding plasma vessel interface; wherein the plasma vessel interfaces are positioned with respect to the plurality of non-planar, superconducting coils such that at least one of the stellarator modules can be replaced with a replacement stellarator module to restore the plasma vessel and the plurality of coils.

The stellarator comprises multiple stellarator modules. Hence, the stellarator may be considered to be modular. To provide illustrative examples, the stellarator may comprise at least 2, preferably at least 3, preferably at least 4, preferably at least 6, preferably at least 8, preferably at least 10, and/or at most 40, preferably at most 35, preferably at most 30, preferably at most 25, preferably at most 20, preferably at most 15, preferably at most 15, preferably at most 10 stellarator modules. Each stellarator module comprises a plasma vessel segment and a corresponding subset of the non-planar, superconducting coils. This modular configuration may address the challenge of maintenance and repair in fusion devices by allowing individual stellarator modules to be replaced without dismantling the entire system. Thereby, downtime and operational costs may potentially be reduced. The plasma vessel interfaces between neighboring stellarator modules are strategically positioned with respect to the coils, which may ensure and improve coupling and efficient magnetic field generation.

By segmenting the plasma vessel and coils into modules, the system may offer enhanced flexibility in design and scalability, allowing for easier upgrades and modifications. This modular approach may also facilitate better thermal management and structural support, as each module can be individually optimized for these parameters. Overall, the described stellarator construction may provide a more robust and maintainable solution for plasma confinement in fusion reactors, addressing specific challenges related to system maintenance, magnetic field precision, and operational efficiency.

The plasma vessel interfaces are positioned with respect to the plurality of non-planar, superconducting coils. This may mean that one or more or each of the plasma vessel interfaces is positioned with respect to one or more, or any combination of the coils thereof. It may not require the interface to be positioned with respect to any one of the coils.

Positioned is done such that at least one of the stellarator modules can be replaced with a replacement stellarator module to restore the plasma vessel and the plurality of coils. The term to "restore" may encompass that the stellarator is in a state in which it is capable of performing its intended function and/or operation. For instance, to "restore" may mean that (once the stellarator has been reassembled and/or reconditioned) the stellarator can resume its normal operational activities.

Specifically, to "restore" may mean that the function of confining plasma is reestablished, and/or that the physical structure of the combination of the (overall) plasma vessel and the coils is rebuilt.

A plasma vessel is a fundamental component designed to contain the plasma within the stellarator system. It serves as the primary enclosure where the plasma is maintained and manipulated for various applications, ensuring the containment of high-energy particles and facilitating the necessary conditions for plasma confinement.

A plurality of non-planar, superconducting coils is utilized for generating a magnetic field essential for confining the plasma inside the plasma vessel. These coils are arranged in non-planar configurations to produce a complex magnetic field geometry, which is crucial for stabilizing and maintaining the plasma within the vessel. The superconducting nature of the coils ensures minimal energy loss and efficient magnetic field generation.

A plurality of stellarator modules is comprised, each comprising a plasma vessel segment and a corresponding subset of the plurality of non-planar, superconducting coils. Each module may represent a distinct section of the overall stellarator structure, integrating both the plasma vessel segment and the associated coils to form a modular and scalable system. This modular approach may allow for flexibility in design and maintenance.

Neighboring stellarator modules are configured to be coupled to each other via a corresponding plasma vessel interface. These interfaces may facilitate a substantially seamless connection between neighboring modules. This may ensure a continuous, robust and/or stable plasma vessel structure. The plasma vessel interfaces may thereby serve to maintain the integrity of the plasma confinement while allowing for modular assembly and disassembly.

The plasma vessel interfaces are positioned with respect to the plurality of non-planar, superconducting coils in such a manner that at least one of the stellarator modules can be replaced with a replacement stellarator module. This configuration may ensure that maintenance or upgrades can be performed without disrupting the overall system. The strategic positioning may allow for the restoration of the plasma vessel and the plurality of coils, maintaining the functionality and efficiency of the stellarator.

The plasma vessel interfaces may comprise a portion of the respective neighboring modules and/or it may comprise a surface, e.g., a toroidal surface or preferably a planar surface. Along such surface, elements can be received without hitting coils as described elsewhere herein.

In some embodiments of the present disclosure, one or more of the plasma vessel interfaces are each positioned along a respective interface surface, preferably defined by a toroidal coupling gap formed between a respective first coupling surface and a respective second coupling surface of the one or more plasma vessel interfaces, more preferably defined by an essentially planar coupling gap formed between a respective first coupling surface and a respective second coupling surface of the one or more plasma vessel interfaces. Optionally, one or more of the plasma vessel interfaces are configured such that a vacuum vessel coupling element and / or one or more containment elements can be received in the gap. The vacuum vessel coupling element may be understood as a plasma vessel coupling element.

The first coupling surface and the respective second coupling surface may comprise for instance the end surfaces of a pair of coupling flanges, each comprised by a respective plasma vessel segment of the two neighboring stellarator modules.

The interface surface may encompass a three-dimensional space. For instance, it may comprise a curved portion, e.g., a convex and/or concave portion.

The toroidal coupling gap may be understood as a gap along a surface that is essentially perpendicular to the toroidal direction of the plasma vessel. Thereby, vacuum vessel coupling elements and/or containment elements can be received and or removed without substantially hitting coils. The toroidal coupling gap may be defined by an arc with a curvature and center essentially matching the one of the major radius of the toroidal surface.

As understood by the skilled person, a toroidal direction may be the direction that runs along the larger circular path around the central void of the torus of the plasma vessel. In a non-limiting example, the toroidal direction may be somewhat similar to a circle following the main circular path of the torus.

More preferably, the coupling gap is essentially planar, which may simplify the manufacturing and assembly processes while maintaining the necessary precision for the stellarator's operation. The planar nature of the coupling gap may allow for easier alignment and may reduce the complexity of the interface, thereby potentially lowering improving the ease of maintenance.

Furthermore, the plasma vessel interfaces are configured to receive a vacuum vessel coupling element and/or one or more containment elements within the gap. This configuration may provide sealing and/or structural support, ensuring that the vacuum integrity of the plasma vessel is maintained and/or that the containment elements can effectively isolate and protect the environment as described elsewhere herein in greater detail.

The inclusion of these elements within the coupling gap enhances the modularity and replaceability of the stellarator modules, allowing for individual modules to be replaced or repaired without compromising the overall system. This modular approach not only extends the operational lifespan of the stellarator but also facilitates upgrades and modifications, thereby improving the adaptability and long-term utility of the fusion device.

The vacuum vessel coupling element and / or the one or more containment elements may each be one individual piece. However, the present disclosure is not limited thereto and the vacuum vessel coupling element and / or the one or more containment elements may comprise one or more sub-parts, the combination of which constituting the vacuum vessel coupling element and / or the one or more containment elements, respectively.

In some embodiments of the present disclosure, one or more of the plasma vessel interfaces each comprise a replaceable vacuum seal, which may be a re-weldable or re-brazerable vacuum seal. This feature facilitates the maintenance and repair of the stellarator by allowing the vacuum seal to be replaced without necessitating the replacement of the entire plasma vessel interface, thereby enhancing the modularity and serviceability of the stellarator.

The vacuum seal may essentially surround the coupling element when the coupling element is received in the gap. This may ensure a secure and airtight connection between neighboring stellarator modules. This configuration may ensure that the plasma vessel remains essentially hermetically sealed, essentially preventing leakage of plasma and/or other gases, which may be critical for maintaining the integrity of the plasma confinement.

Optionally, the separation between the vacuum seal and a coil that at least partially covers the vacuum seal is specified to be at least 10 cm, preferably at least 20 cm, preferably at least 30 cm, preferably at least 40 cm, preferably at least 50 cm, preferably at least 60 cm, preferably at least 70 cm, and/or at most 100 cm, preferably at most 90 cm, preferably at most 80 cm, preferably at most 70 cm, preferably at most 60 cm, preferably at most 50 cm. The skilled person is able to select technically meaningful ranges comprising the aforementioned values.

The separation between the vacuum seal and a coil that at least partially covers the vacuum seal may be at most 100% of a distance of neighboring coils, preferably at most 90% of a distance of neighboring coils, preferably at most 80% of a distance of neighboring coils, preferably at most 70% of a distance of neighboring coils, preferably at most 60% of a distance of neighboring coils, preferably at most 50% of a distance of neighboring coils, preferably at most 40% of a distance of neighboring coils, and/or at least 5% of a distance of neighboring coils, preferably at least 10% of a distance of neighboring coils, preferably at least 20% of a distance of neighboring coils, preferably at least 30% of a distance of neighboring coils, preferably at least 40% of a distance of neighboring coils, preferably at least 50% of a distance of neighboring coils.

These specified separations may be helpful for several reasons: they may ensure that the vacuum seal is sufficiently distanced from the superconducting coils to prevent any thermal or electromagnetic interference that could compromise the performance of the coils or the integrity of the vacuum seal.

The specified distances may also facilitate easier access to the vacuum seal for maintenance and replacement purposes, without the need to disassemble or disturb the superconducting coils.

This spatial arrangement may enhance the overall reliability and longevity of the stellarator by minimizing the risk of damage to both the vacuum seal and the coils during maintenance operations. Furthermore, the specified separations may help to maintain the structural integrity of the stellarator by ensuring that the vacuum seal and the coils are not subjected to undue mechanical stresses.

This careful consideration of the spatial relationship between the vacuum seal and the coils may underscore the importance of precise engineering in the design of the stellarator. This may ensure that all components function optimally and harmoniously to achieve the desired plasma confinement and stability.

Further, the specified separation has the advantage to provide a sufficiently large space to permit access by the appropriate tools, such as welding and/or brazing tools as well as any other intervening tools required for the coils and cryostat envelope.

In some embodiments of the present disclosure, the stellarator is designed such that one or more of the plasma vessel interfaces are positioned with respect to the plurality of non-planar, superconducting coils in a manner that ensures each interface surface of the plasma vessel interfaces does not intersect with the coils of the neighboring stellarator modules within a poloidal angle range of at least 40°, preferably at least 50°, preferably at least 60°, preferably at least 70°, preferably at least 80°, preferably at least 90°, preferably at least 100°, preferably at least 110°, preferably at least 120°.

This specific arrangement of the plasma vessel interfaces relative to the superconducting coils introduces several advantages and mechanisms of communication between components.

For instance, by ensuring that the interface surfaces do not intersect with the coils within the specified poloidal angle range, the design minimizes potential interference and/or mechanical stress between the plasma vessel interfaces and the superconducting coils. This spatial separation enhances the structural integrity and operational stability of the stellarator, as it reduces the likelihood of mechanical deformation or electrical faults that could arise from direct intersection or close proximity of these components.

Moreover, this configuration may facilitate easier and more efficient replacement of stellarator modules. When the plasma vessel interfaces are strategically positioned to avoid intersection with the coils, it simplifies the alignment and coupling process during maintenance or replacement operations. This means that, e.g., a replacement stellarator module can be easily integrated into the system without the need for extensive realignment or adjustment of the superconducting coils, thereby reducing downtime and maintenance complexity. Additionally, this arrangement can improve receiving and/or removing respective vacuum vessel coupling element(s) and/or one or more containment elements in the gap.

Furthermore, by specifying a poloidal angle range of at least 40°, preferably at least 50°, preferably at least 60°, preferably at least 70°, preferably at least 80°, preferably at least 90°, preferably at least 100°, preferably at least 110°, preferably at least 120°, the design provides a robust margin of safety and flexibility, accommodating variations in coil design and positioning while still ensuring the non-intersecting condition is met.

This flexibility can be particularly beneficial in the design and construction phases, allowing for adjustments and optimizations without compromising the fundamental requirement of non-intersection. Overall, this embodiment enhances the operational reliability, maintainability, and performance of the stellarator by carefully managing the spatial relationship between the plasma vessel interfaces and the superconducting coils.

The poloidal angle range may be understood to be at any circumferential position not limited to, e.g., the one substantially symmetrical with respect to the horizontal plane. The angle range encompasses positive and negative angles. For instance, angle range starting from 0° to 60° as well as starting from -30° to 30° both encompasses a range of 60°.

The term "poloidal angle" as used in here may refer to the angular coordinate in a plane that may be essential perpendicular to the toroidal direction of the stellarator. The poloidal angle may be measured in a cross-sectional plane of the plasma vessel, essentially extending around the minor axis of the torus. The poloidal angle may be important for describing the geometry and positioning of magnetic field lines and structural components within the stellarator, as these affect plasma confinement and stability.

Alternatively or additionally, in some embodiments of the present disclosure, one or more of the plasma vessel interfaces are positioned with respect to the plurality of non-planar, superconducting coils such that each interface surface of the plasma vessel interfaces does not intersect with the coils of the neighboring stellarator modules within a poloidal angle range of at most 360°, preferably at most 340°, preferably at most 320°, preferably at most 300°, preferably at most 280°, preferably at most 260°, preferably at most 240°, preferably at most 220°, preferably at most 200°, preferably at most 180°.

In some embodiments of the present disclosure, a separation between a pair of neighboring coils in the poloidal angle range, where the pair is not intersected by the interface surface, is larger than or equal to the width of the gap.

This may introduce a precise spatial arrangement of the non-planar, superconducting coils, ensuring that the distance between adjacent coils in certain regions of the poloidal angle is maintained at or above a specific threshold. The mechanism of communication between components may involve the spatial relationship and positioning of the coils relative to each other and the interface surface. This arrangement may facilitate maintaining the integrity and functionality of the magnetic field generated by the coils.

By ensuring that the separation between the coils is sufficiently large, this configuration facilitates easier access and replacement of individual stellarator modules, as the larger separation provides more space for maneuvering and aligning the replacement modules with the existing structure. This is particularly important for maintenance and operational efficiency, as it allows for the replacement of modules without necessitating extensive disassembly or realignment of the entire system. Additionally, this arrangement can improve receiving and/or removing respective vacuum vessel coupling element(s) and/or one or more containment elements in the gap.

Furthermore, the specified separation may ensure that the magnetic field lines are appropriately shaped and directed, enhancing the overall performance and efficiency of the stellarator. This embodiment may also contribute to the modularity and scalability of the stellarator design, allowing for the addition or replacement of modules without significant disruption to the existing configuration.

In some embodiments of the present disclosure, the vacuum vessel coupling element is essentially planar, thereby facilitating a straightforward and secure connection between neighboring stellarator modules. This planar configuration ensures that the coupling element can be easily aligned and attached, promoting structural integrity and ease of maintenance.

Additionally, the vacuum vessel coupling element preferably has the shape of an annulus, which provides a robust and continuous interface that enhances the mechanical stability of the connection. The annular shape may allow for a more uniform distribution of mechanical stresses, thereby reducing the likelihood of structural failure and improving the overall durability of the stellarator.

Furthermore, the vacuum vessel interface is designed in such a way that upon removal of the coupling element from the gap between neighboring modules, one or more preferably two containment elements can be inserted into the gap. These containment elements may serve the function of essentially containing contaminants, such as radioactive isotopes, within one or more vacuum vessel segments. Optionally, one or two of the one or two containment elements are configured to serve as a radiation shield, when received in the gap.

This feature may be important for maintaining the safety and cleanliness of the plasma vessel environment, as it prevents the escape of, e.g., hazardous materials, particles, or the like during maintenance and/or module replacement.

By ensuring that contaminants are confined to specific segments, this design minimizes the risk of contamination essentially spreading throughout the entire stellarator system or through at least a part of the stellarator system. The ability to contain contaminants within designated areas also simplifies the decontamination process, as only the affected segments need to be addressed.

This containment capability may be helpful for maintaining the operational integrity and safety of the stellarator, especially in scenarios where modules need to be replaced or serviced.

The planar and annular design of the vacuum vessel coupling element, combined with the contaminant containment capability, represents an advancement in the design and operation of stellarators, providing a more reliable and user-friendly solution for plasma confinement and maintenance.

While the vacuum vessel coupling element is essentially planar and has preferably a shape of an annulus, it is not precluded that the vacuum vessel coupling element may be curved, e.g., it may comprise convex and/or concave portions. In this manner, the vacuum vessel coupling element may essentially correspond to the interface surface, when the latter one is curved as described elsewhere herein. When the vacuum vessel coupling element is curved, it may still preferably have a shape of an annulus.

In some embodiments of the present disclosure, the stellarator comprises one or more containment elements that are essentially planar and preferably have a shape corresponding to a cross-section of the vacuum vessel.

This feature may ensure that the containment elements align essentially precisely with the cross-sectional geometry of the vacuum vessel. The planar nature of these containment elements facilitates easier assembly. In some instances, it may facilitate manufacturing as well, as planar components are generally simpler to fabricate, and handle compared to non-planar ones.

Additionally, the correspondence in shape between the containment elements and the vacuum vessel cross-section may facilitate a snug fit, which may be helpful for maintaining the integrity of the plasma confinement. This alignment helps in minimizing gaps and/or misalignments that could lead to plasma leakage or instabilities, thereby enhancing the overall efficiency and safety of the stellarator.

Furthermore, the use of planar containment elements can simplify the modular design of the stellarator, making it easier to replace or repair individual modules without disrupting the entire or a part of the system. This modularity may be particularly beneficial for maintenance and/or operational flexibility, as it allows for the replacement of specific stellarator modules with minimal downtime.

The planar containment elements may also contribute to the structural stability of the stellarator by providing a uniform and consistent interface with the vacuum vessel, which can help in distributing mechanical stresses more evenly. This uniform stress distribution is important for the longevity and durability of the stellarator, as it reduces the likelihood of structural failures or deformations over time.

While the containment elements may be essentially planar, it is not precluded that the containment elements may be curved, e.g., one or more of the containment elements may comprise convex and/or concave portions. In this manner, the containment elements may essentially correspond to the interface surface, when the latter one is curved as described elsewhere herein. When the containment element is curved, it may still preferably have a shape corresponding to a cross-section of the vacuum vessel.

In some embodiments of the present disclosure, the stellarator comprises one or more plasma vessel interfaces that are configured such that the coupling elements and/or containment elements can be slidingly received in a gap in an essentially form-fit manner.

This configuration ensures that the components may align essentially precisely and securely, enhancing the structural integrity and operational reliability of the stellarator. The form-fit nature of the interface may allow for an essentially seamless connection between neighboring stellarator modules, thereby minimizing potential misalignments and ensuring a consistent magnetic field for plasma confinement.

Additionally, the sliding reception mechanism may facilitate easier assembly and disassembly of the modules, which is particularly beneficial for maintenance and replacement purposes.

The sliding mechanism may be further defined by the inclusion of a sliding rail, which guides the coupling and containment elements into the gap. The sliding rail may ensure a smooth and controlled insertion process, reducing the risk of damage to the components during assembly. This controlled insertion may be advantageous in a high-precision environment such as a stellarator, where even minor misalignments may have an impact on performance.

The sliding rail preferably has an essentially dovetail shape, which provides additional stability and strength to the connection. The dovetail shape may allow for mechanical interlocking functionalities, which may prevent the components from separating under operational stresses. This shape also distributes the load more evenly across the interface, reducing the likelihood of localized stress concentrations that could lead to component failure.

The combination of the form-fit manner, sliding rail, and dovetail shape results in a robust and reliable interface that enhances the overall durability and longevity of the stellarator. Furthermore, these features facilitate the modularity of the stellarator, allowing for individual modules to be replaced without requiring extensive disassembly of the entire system.

Examples of sliding rail or positive locking mechanisms include but are not limited to a telescopic drawer slide, a linear guide rail system, e.g., one that uses ball bearings for movement along a defined path while locking into place at various intervals, a sliding dovetail joint, e.g., one that provides a secure, interlocking connection between two components in woodworking or carpentry applications, a cam lock, e.g., one that rotates into a locked position when aligned with a corresponding notch to prevent movement, and a ratchet mechanism, e.g., one that allows movement in one direction with a toothed gear and pawl that engages to lock in place, preventing reverse motion.

Moreover, sliding rail may encompass a sliding in one direction and positive locking with respect to a direction essentially perpendicular to the sliding direction.

In some embodiments of the present disclosure, the one or more plasma vessel interfaces are positioned with respect to the plurality of non-planar, superconducting coils such that the coupling elements can be received in the respective gap essentially without modifying the subset of coils of the respective stellarator modules.

This could potentially introduce an enhancement in the modularity and maintainability of the stellarator system. Specifically, if the precise positioning of the plasma vessel interfaces relative to the coils is ensured, then coupling elements could be inserted to connect neighboring stellarator modules without the need to alter or adjust the subset of coils within each module. This mechanism of communication between the plasma vessel interfaces and the coils may facilitate a seamless integration process, thereby minimizing the risk of misalignment or disruption to the magnetic field generated by the coils.

The ability to receive coupling elements without modifying the coils may underscore a design that prioritizes ease of assembly and disassembly, which may be particularly advantageous for maintenance and repair operations. In practical terms, this may mean that if a stellarator module requires replacement or servicing, it may be decoupled and removed without necessitating extensive reconfiguration of the magnetic confinement system. This may bring a level of operational efficiency and flexibility that is helpful for sustained performance of the stellarator.

By ensuring that the coupling elements may be accommodated without coil modification, the system may reduce downtime and potential errors associated with coil realignment. This design consideration may also enhance the overall robustness of the stellarator, as the integrity of the magnetic field is preserved during module exchanges.

Furthermore, this embodiment may support a modular approach to stellarator construction, allowing for incremental upgrades and scalability. As a result, the stellarator may adapt to evolving technological advancements and operational requirements without extensive overhauls. This feature may thus represent an improved integration of mechanical and magnetic design principles, aimed at optimizing both the functionality and maintainability of the stellarator system.

In some embodiments of the present disclosure, the plasma vessel interfaces are positioned with respect to the plurality of non-planar, superconducting coils such that the at least one of the stellarator modules can be replaced by removing said at least one of the stellarator modules at least partially along an essentially horizontal plane.

This embodiment may introduce several advantages. For instance, the positioning of the plasma vessel interfaces relative to the coils may ensure that the mechanical and electromagnetic coupling between neighboring stellarator modules is maintained during the replacement process. This may be helpful for preserving the integrity of the magnetic field required for plasma confinement.

The horizontal plane removal feature may facilitate easier access to the modules, thereby simplifying the maintenance and replacement procedures, which may be particularly advantageous in a high-stakes environment where minimizing downtime may be critical.

The horizontal plane of the stellarator may be arranged essentially perpendicular to a height direction of the stellarator.

As illustrative and non-limiting examples, the horizontal removal mechanism may involve a combination of one or more of mechanical guides, alignment features, and possibly quick-release fasteners that allow for the precise and efficient detachment and reattachment of the modules. This configuration may reduce the complexity of the replacement process, potentially allowing for automated or semi-automated module exchanges, which may further enhance operational efficiency.

Additionally, removing at least partially along the essentially horizontal plane may contribute to improved safety protocols, as it allows for the replacement operations to be conducted in a more controlled and predictable manner. The ability to replace modules at least partially horizontally may also mean that the stellarator system requires less vertical space (although this is not precluded), which can be a significant advantage in facilities where space is at a premium.

Moreover, this feature may lead to cost savings in terms of both the physical infrastructure required to house the stellarator and the labor involved in module replacement.

It is noted that the stellarator module may at least partially be removed along a plane different from the essentially horizontal plane. For instance, the stellarator module may be removed along an oblique or vertical direction. This may happen for instance at the beginning of the overall removal process.

In some embodiments of the present disclosure, one or more of the stellarator modules comprises one or more cryostat segments for insulating one or more of the plurality of coils, such that the subset of the plurality of coils can be cooled.

This feature may introduce a mechanism for thermal insulation, ensuring that the superconducting coils may essentially be maintained at the necessary low temperatures to function effectively.

The cryostat segments may serve as barriers to heat transfer, thereby preserving the low-temperature environment required for superconductivity.

Additionally, by way of the cryostat segments insulating one or more of the plurality of coils, the subset of the plurality of coils may be cooled, preferably below a critical temperature for attaining superconductivity.

This cooling mechanism may be crucial for the operational efficacy of the superconducting coils, as it may ensure that the coils remain in a superconducting state, thereby minimizing electrical resistance and maximizing efficiency in generating the magnetic field for plasma confinement. The cooling may be achieved through various means, including but not limited to cryogenic liquids or advanced refrigeration systems, which may be integrated into the stellarator modules to maintain the coils at the desired temperature.

Furthermore, each of the plurality of cryostat segments may comprise removable panels to facilitate access to the corresponding plasma vessel segment. This feature may enhance the maintainability and modularity of the stellarator, allowing for easier inspection, repair, and replacement of components within the plasma vessel. The removable panels may provide a practical solution for accessing the internal components without necessitating the disassembly of the entire stellarator module, thereby reducing downtime and improving operational efficiency.

The combination of these features-thermal insulation via cryostat segments, cooling of the coils below their critical temperature, and the inclusion of removable panels-may collectively enhance the functionality, efficiency, and maintainability of the stellarator. These improvements may ensure that the stellarator may operate continuously and/or reliably. This may be the case with minimal interruptions for maintenance, while maintaining the necessary conditions for effective plasma confinement.

A second aspect of the present disclosure provides a method for stellarator waste management, the method comprising: removing a stellarator module from a stellarator comprising a plurality of stellarator modules, preferably from a stellarator as described in here, in particular with respect to the first aspect; disassembling at least partially the removed stellarator module to obtain a plurality of disassembled stellarator module components; identifying a first set of components to be reused, and a second set of components to be processed into radioactive waste; reusing the first set of components to assemble a stellarator replacement module; and processing the second set of components into radioactive waste.

It goes without saying that the technical properties shown and/or described for the stellarator of the first aspect, and the advantages and improvements over the state of the art are likewise applicable to the method for stellarator waste management. The method generally has the advantage that production of waste can be effectively mitigated.

A stellarator module may be removed from a stellarator using various mechanisms and methods to facilitate efficient maintenance and replacement processes. For example, the module may be extracted using a horizontal plane removal system, which allows the module to be detached and moved laterally, thus reducing the need for vertical clearance and enabling easier access.

Alternatively or additionally, the removal process may involve overhead cranes and lifting equipment designed to hoist the module vertically out of the stellarator framework, allowing for a controlled and/or precise extraction.

A sliding rail system may also be employed to guide the module along a predetermined path, minimizing manual handling and the risk of misalignment.

Quick-release fastening mechanisms may be used to secure the module in place while enabling rapid disengagement for swift removal.

Alternatively or additionally, hydraulic or pneumatic actuators may provide a smooth and force-controlled extraction by pushing or pulling the module out of its position.

Automated robotic systems may also be utilized, employing mechanical arms or guided robots to carefully unfasten and remove the module, thereby enhancing precision and reducing the potential for human error.

Furthermore, a rotational platform may facilitate the removal of the module by allowing it to be rotated out of the stellarator structure, which could simplify the process in confined spaces. These methods may collectively enhance the flexibility and efficiency of stellarator maintenance and module replacement.

A stellarator module may be disassembled at least partially using various mechanisms and methods to facilitate maintenance and repairs. For instance, removable panel systems may allow specific sections of the module to be accessed and detached, thereby enabling partial disassembly for inspection or service without necessitating the complete removal of the module.

Alternatively or additionally, bolted or screwed connections may permit certain components or subassemblies within the module to be unfastened and removed, which may allow for targeted disassembly and repair. Quick-release fasteners may also be utilized to enable the swift disassembly of key parts of the module, facilitating rapid removal with minimal tooling. Modular coupling systems may support the disconnection of interlocking sections or submodules, which may allow for partial separation and easier access for maintenance.

Alternatively or additionally, sliding or telescoping components may permit sections of the module to be partially extended or retracted, thus enabling partial disassembly and adjustment in confined spaces. Rotating or hinged panels may provide access to internal components by swinging open or rotating away, offering a practical means for partial disassembly.

Alternatively or additionally, automated disassembly robots may be employed to systematically dismantle specific parts of the module, ensuring precise and controlled partial disassembly.

Components may be identified for reuse or non-reuse through several methods to ensure efficient and effective management. For instance, visual inspection and condition assessment may be employed to determine if a component is suitable for reuse based on its physical state, such as signs of wear, damage, or corrosion. Alternatively or additionally, functional testing may be conducted to evaluate whether the component still performs its intended function within acceptable parameters, thus indicating its suitability for reuse. Diagnostic sensors and data logging may also be utilized to monitor and record the component's performance, providing data that could help identify if it remains operationally viable for reuse. Automated inspection systems with imaging and measurement technologies may further analyze components to assess their condition and functionality, facilitating the distinction between reusable and non-reusable parts. Material analysis may involve testing the component's material properties, such as strength, hardness, or chemical composition, to ensure it meets reuse standards or to determine if it has degraded.

Alternatively or additionally, historical maintenance records may be reviewed to assess past performance and repairs, which may help predict the component's potential for continued reliability and suitability for reuse.

In some embodiments of the present disclosure, processing the second set of components into radioactive waste comprises: separating one or more radioactive materials from the second set of components, optionally after reducing a volume of the second set of components; and containerizing the separated radioactive materials in a radioactive waste storage container.

In some embodiments of the present disclosure, the method further comprises restoring the stellarator by replacing the removed stellarator module by the assembled stellarator module.

A third aspect of the present disclosure provides a stellarator waste management plant, comprising: a stellarator module removal and replacement system configured for removing a stellarator module from a stellarator comprising a plurality of stellarator modules, preferably from a stellarator as described in here, in particular with respect to the first aspect; a stellarator module inspection and disassembly unit configured for disassembling a least partially the removed stellarator module to obtain a plurality of disassembled stellarator module components and for identifying a first set of components to be reused, and a second set of components to be processed into radioactive waste; a stellarator module assembly unit configured to reuse the first set of components for assembling a stellarator replacement module; and a radioactive waste processing unit for processing the second set of components into radioactive waste.

It goes without saying that the technical properties shown and/or described for the stellarator of the first aspect and of the second aspect, and the advantages and improvements over the state of the art are likewise applicable to the stellarator waste management plant. The stellarator waste management plant generally has the advantage that production of waste can be effectively mitigated.

The stellarator module removal and replacement system may be implemented by way of one or more of the examples mentioned above with respect to the method in the second aspect.

The stellarator module inspection and disassembly unit may be implemented by way of one or more of the examples mentioned above with respect to the method in the second aspect.

The stellarator module assembly unit may comprise parts of the stellarator module removal and replacement system, e.g., parts that allow to assemble the first set of components to a stellarator.

The radioactive waste processing unit may be, for instance, a device, specifically a robot, which could process the second set of components into radioactive waste.

In some embodiments of the present disclosure, the stellarator waste management plant is further configured to carry out the steps of the method as described in here, in particular with respect to the second aspect.

### BRIEF DESCRIPTION OF THE FIGURES

Reference is made to the following figures:
Fig. 1 shows a stellarator having one module removed according to a possible embodiment of the present disclosure in a perspective view.
Fig. 2 shows aspects of a stellarator according to a possible embodiment of the present disclosure in a perspective view.
Fig. 3 shows schematic aspects of a stellarator according to a possible embodiment of the present disclosure in a view along a toroidal direction of the stellarator.
Fig. 4 shows aspects of a stellarator according to a possible embodiment of the present disclosure in a cross-sectional view.
Fig. 5 shows aspects of a stellarator according to a possible embodiment of the present disclosure in a perspective view.
Fig. 6 shows aspects of removing and/or receiving elements in a plasma vessel interface according to a possible embodiment of the present disclosure.
Fig. 7 shows a stellarator according to a possible embodiment of the present disclosure in a perspective view.
Fig. 8 shows a schematic stellarator waste management plant according to a possible embodiment of the present disclosure.

### DETAILED DESCRIPTION

The term "coupled", and variations thereof includes the joining of two members directly or indirectly to one another. Such joining may be stationary (e.g., permanent or fixed) or moveable (e.g., removable or releasable). Such joining may be achieved with the two members coupled directly to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above.

The term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

When dimensions are described herein, manufacturing tolerances usually have to be taken into consideration, which is expressed by the term "substantially". Thus, the dimensions described by such a term may vary slightly. Also in general, i.e., not necessarily limited to dimensions, it is submitted that unless otherwise stated, the term "substantial" or "substantially" as used in the present context may be understood to a great or significant extent or for the most part or essentially.

Furthermore, as used herein, the terms "set", "group", "subset" are intended to include one or more items (e.g., related items, unrelated items, a combination of related and unrelated items, and/or the like), and may be used interchangeably with "one or more". Where only one item is intended, the phrase "only one" or similar language is used.

A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

In the following, a detailed description with reference to the figures is provided.

While specific feature combinations are described in the following with respect to exemplary embodiments of the present disclosure, it is to be understood that not all features of the described aspects have to be present for realizing the technical advantages provided by the present disclosure, which is defined by the subject matter of the claims. The disclosed aspects may be modified by combining certain features of one aspect with one or more features of another aspect. Specifically, the skilled person will understand that features, components and/or functional elements of one aspect can be combined with technically compatible features, components and/or functional elements of any other aspect of the present disclosure given that the resulting combination falls within the definition of the present disclosure. The skilled person also understands that certain features may be omitted in so far as they appear dispensable.

Throughout the present figures and specification, the same reference numerals refer to the same elements. The figures may not be drawn to scale, and the relative size, proportions, and depiction of elements in the figures may be exaggerated for clarity, illustration, and convenience.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

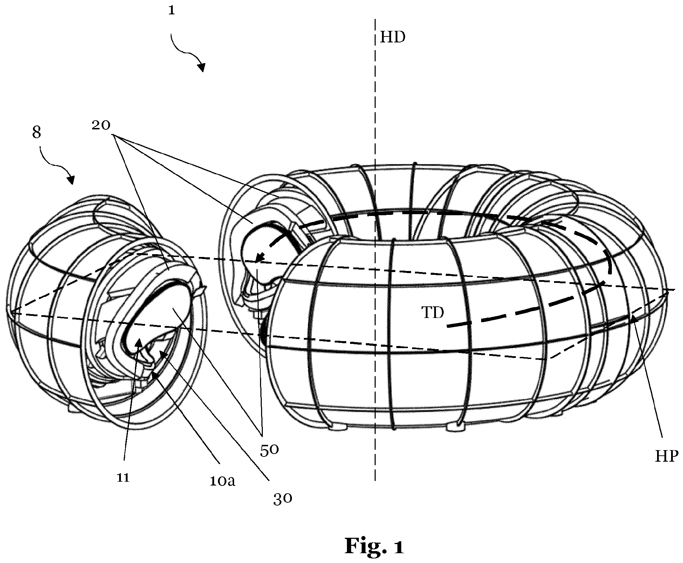

Fig. 1 illustrates an embodiment of a stellarator 1, which is designed for plasma confinement. The stellarator 1 comprises a plasma vessel 10 and a plurality of non-planar, superconducting coils 20. These coils 20 are responsible for generating the magnetic field necessary to confine the plasma within the plasma vessel 10.

The stellarator 1 may be modular, comprising multiple stellarator modules 8. Each stellarator module 8 includes a plasma vessel segment 10a (only one of which is indicated in Fig. 1 for brevity) and a corresponding subset of the plurality of non-planar, superconducting coils 20. The modular design may allow for neighboring stellarator modules 8 to be coupled to each other via corresponding plasma vessel interfaces 30. These interfaces 30 may be positioned with respect to the plurality of non-planar, superconducting coils 20, enabling the replacement of at least one stellarator module 8 with a replacement stellarator module to restore the plasma vessel 10 and the plurality of coils 20.

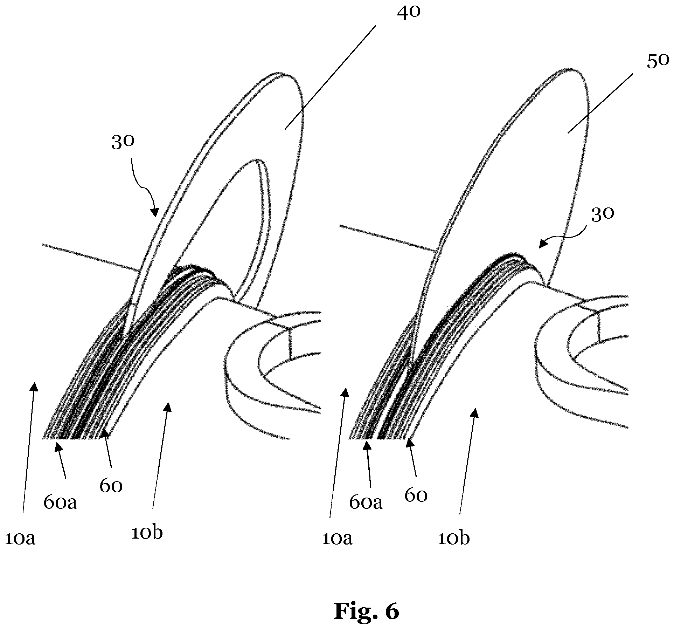

The figure further details the positioning and configuration of the plasma vessel interfaces 30. As exemplarily depicted in this figure, one or more of the plasma vessel interfaces 30 may be positioned with respect to the coils 20 such that the removal and replacement of stellarator modules 8 is facilitated along an essentially horizontal plane HP. The interfaces 30 may be designed to accommodate vacuum vessel coupling elements 40 and containment elements 50, which may be received in gaps formed between the coupling surfaces of the interfaces 30 (as also detailed in **Fig. 6****).** As can be seen, two containment elements 50 are depicted on two interfaces 30. However, the disclosure is not limited to this specific example.

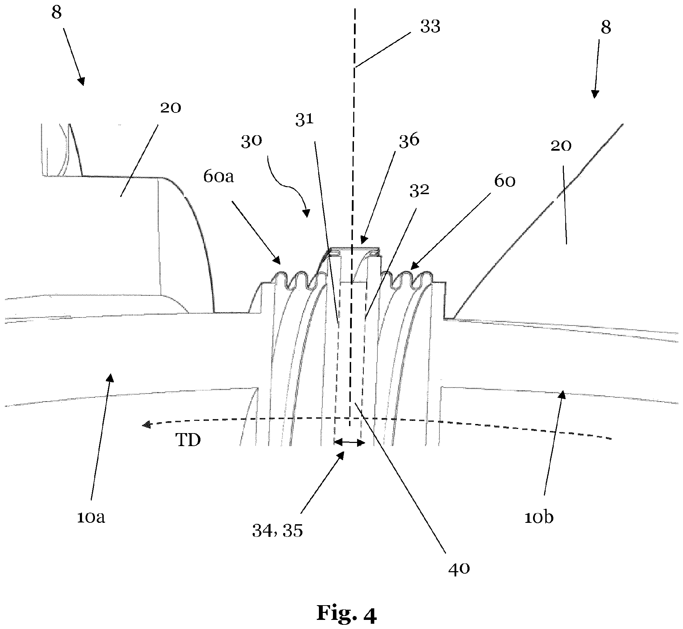

The embodiment also includes a separation between the vacuum seal 36 and the coils 20 (as best seen in **Fig. 4****).** As set forth elsewhere, this may ensure that the vacuum seal 36 is at least, e.g., 20 cm away from the nearest coil 20, with preferred separations of at least 30 cm, 40 cm, and up to 100 cm.

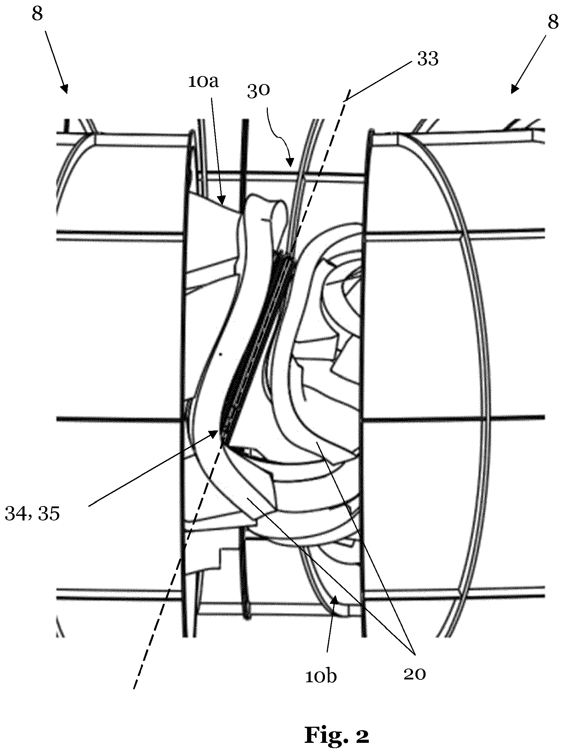

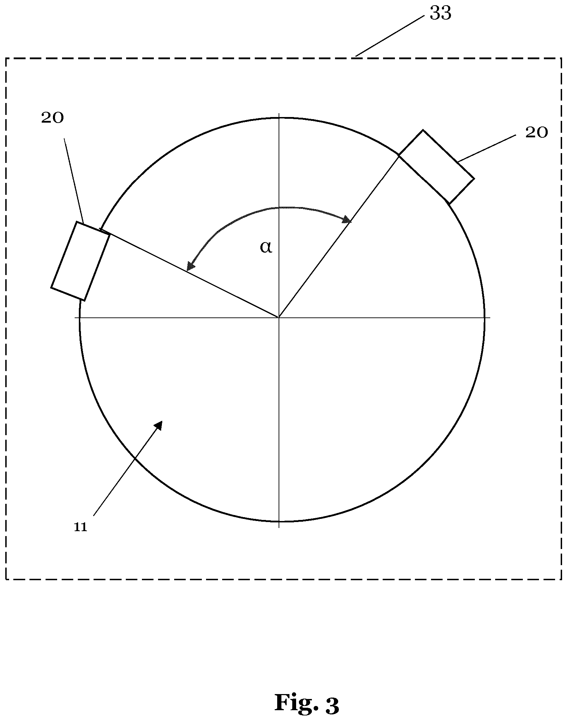

Additionally, the figure (and as best seen in **Fig. 2** and **3****)** shows that the plasma vessel interfaces 30 are positioned such that each interface surface 30 does not intersect with the coils 20 in a poloidal angle range α of, e.g., at least 40°, preferably at least 50°, preferably at least 60°, preferably at least 70°, preferably at least 80°, preferably at least 90°, preferably at least 100°, preferably at least 110°, preferably at least 120°, and/or at most 360°, preferably at most 340°, preferably at most 320°, preferably at most 300°, preferably at most 280°, preferably at most 260°, preferably at most 240°, preferably at most 220°, preferably at most 200°, preferably at most 180°. This provides for some angular range that is free from a coil and that facilitates inserting and removing elements (e.g., coupling elements and containment elements).

The containment elements 50 may be designed to be essentially planar and correspond to the cross-section of the vacuum vessel 10. However, they may additionally or alternatively adopt a curved shape, so as to correspond to a toroidal coupling gap 34 as described elsewhere herein. They can be slidingly received in the gap 33, 34 in an essentially form-fit manner, preferably via a sliding rail with an essentially dovetail shape. This design allows for easy insertion and removal of the containment elements 50, facilitating maintenance and replacement operations.

The superconducting coils may be implemented by high-temperature superconductors, such as 2^{nd} generation HTS tape conductors, such as ReBCO-tape conductors.

**Fig. 2** illustrates an embodiment of aspects of a stellarator 1. The figure depicts the coupling between neighboring stellarator modules 8 (one on the left-hand side and one on the right-hand side), by way of a plasma vessel interface 30. This facilitates the modular construction and maintenance of the stellarator 1.

The plasma vessel segments 10a and 10b are shown as part of the neighboring stellarator modules 8. These segments 10a, 10b are connected via the plasma vessel interface 30. The interface 30 may allow maintaining the integrity and continuity of the plasma vessel 10, ensuring that the plasma remains confined within the vessel during operation.

The interface surface 33 is depicted, which defines the boundary where the plasma vessel segments 10a and 10b meet. This surface 33 allows for the alignment and coupling of the modules 8. A toroidal coupling gap 34 or an essentially planar coupling gap 35 is formed between the first coupling surface 31 of plasma vessel segment 10a and the second coupling surface 32 of plasma vessel segment 10b (coupling surfaces 31 and 32 are also shown in **Fig. 4** and may be sandwiched by respective flanges, which may be sandwiched by expansion bellows on the left 60a and on the right 60 in Fig. 4). This gap 34, 35 may be designed to accommodate a coupling element 40 and containment elements 50, facilitating the modularity and replaceability of the stellarator modules 8.

The non-planar, superconducting coils 20 are positioned around the plasma vessel segments 10a and 10b. These coils generate the magnetic field necessary for plasma confinement. The positioning of the plasma vessel interface 30 with respect to the coils 20 is such that the interface does not intersect with the coils 20 within a specified poloidal angle range a, ensuring that the magnetic field is not disrupted during stellarator module 8 replacement.

Fig. 2 provides some details of the plasma vessel interface 30 between stellarator modules 8; however, the disclosure is not limited to this example and the example does not include all features as described elsewhere herein. The interface surface 33 is, in this figure, shown to be defined by an essentially planar coupling gap 35 formed between the first coupling surface 31 and the second coupling surface 32. However, it is also possible that the interface surface 33 defined by a toroidal coupling gap 34 formed between the first coupling surface 31 and the second coupling surface 32.

**Fig. 3** schematically illustrates a cross-section of a plasma vessel, the normal of the cross-section being substantially parallel to a toroidal direction TD of the plasma vessel 10, i.e., Fig. 3 shows a poloidal cross-section of the plasma vessel. Fig. 3 details on the spatial arrangement and angular positioning of the non-planar superconducting coils relative to the plasma vessel interface 30 and in particular relative to the interface surface 33.

The cross section of the plasma vessel 11 is schematically depicted as a circular structure at the center of the figure. At least partially surrounding the cross section of the plasma vessel 11 are schematically non-planar superconducting coils 20, which are positioned at specific exemplary angular intervals.

The interface surface 33 is represented by a dashed rectangular boundary encompassing the cross section of the plasma vessel 11 and the superconducting coils 20. This interface surface 33 is projected further beyond the boundaries of the cross section of the plasma vessel 11 for illustrative purposes. As understood, the physical gap(s) 34, 35 may not go beyond the boundaries of the cross section of the plasma vessel 11. The interface surface 33 may delineate the region where neighboring stellarator modules 8 are coupled. The positioning of the interface surface 33 is helpful for ensuring that the modules 8 can be replaced without disrupting the magnetic field configuration generated by the coils 20.

The angular range α is indicated by a curved arrow between two radial lines extending from the center of the cross section of the plasma vessel 11. This angular range α defines the poloidal angle within which the interface surface 33 does not intersect the coils 20. This non-intersecting configuration is helpful for ensuring that the replacement of stellarator modules 8 does not interfere with the physical presence of the superconducting coils 20.

The figure illustrates the spatial separation between the coils 20 and the interface surface 33 in an exemplary manner, ensuring that the interface surface 33 is positioned such that it does not intersect the coils 20 within the specified angular range a. It is noted that the coils 20 may continue to intersect the interface surface 33 in the remaining range of about 360° minus the angular range a.

As can be gathered from the combination of Fig. 2 and Fig. 3, a separation between a pair of neighboring coils 20 in the poloidal angle range α where the pair is not intersected by the interface surface 33 is larger than or equal to a width of the gap 34, 35.

As can be gathered from, e.g., Fig. 2 and 3, one or more of the plasma vessel interfaces 30 are positioned with respect to the plurality of coils 20 such that the coupling elements 40 can be received in the respective gap 34, 35 essentially without modifying the subset of coils 20 of the respective stellarator modules 8. For instance, they do not need to be disassembled or the like.

**Fig. 4** illustrates an embodiment of a plasma vessel interface 30 within a stellarator 1, detailing the structural and functional aspects of the interface 30. The figure depicts the interface 30 sandwiched by two plasma vessel segments 10a and 10b, which are part of neighboring stellarator modules 8. The toroidal coupling gap 34 or essentially planar coupling gap 35 are shown, which are defined by a first coupling surface 31 and a second coupling surface 32. The coupling gaps 34, 35 facilitating the alignment and connection of the plasma vessel segments 10a, 10b.

The interface surface 33 is shown, in this example, as a dashed line, indicating the plane along which the coupling occurs. The vacuum vessel coupling element 40 is positioned within the coupling gap 34, 35, maintain the vacuum integrity of the plasma vessel, e.g., during operation of the stellarator 1. The coupling element 40 is designed to be replaceable, allowing for maintenance and replacement without significant disruption to the overall structure.

The figure also highlights the presence of expansion bellows 60 and 60a, which may be positioned adjacent to the coupling surfaces 31 and 32. These expansion bellows 60 and 60a may are designed such that they can be compressed, e.g., in the toroidal direction TD, so as to provide access to the interface 30. As described elsewhere in here, containment elements 50 are configured to be slidingly received in the gap 34, 35 in an essentially form-fit manner, potentially utilizing a sliding rail mechanism with a dovetail shape for secure positioning.

A replaceable vacuum seal 36 surrounds the coupling element 40, when said element 40 is received within the gap 34, 35. This vacuum seal 36 can be re-weldable or re-brazerable, ensuring a robust and maintainable seal. As a preferred way of stellarator module removal 8, the vacuum seal 36 (which may be a UHV vacuum seal) is removed first. Subsequently, the bellows 60, 60a are compressed to provide access to the interface 30.

The figure provides a detailed view of the interface configuration, emphasizing the modularity and replaceability of the stellarator components. The design allows for individual stellarator modules to be replaced or maintained without necessitating the disassembly of the entire plasma vessel structure. This modular approach enhances the maintainability and longevity of the stellarator, facilitating efficient waste management and component replacement.

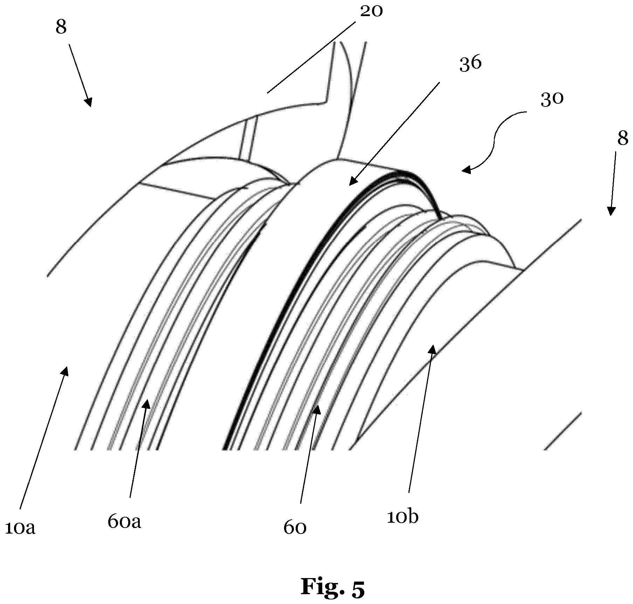

**Fig. 5** illustrates a detailed view of the plasma vessel interface 30 between neighboring stellarator modules 8. The figure highlights the coupling between two plasma vessel segments, 10a and 10b, which are part of neighboring stellarator modules 8. The interface 30 is designed to facilitate the connection and potential replacement of stellarator modules 8.

The plasma vessel segments 10a and 10b are shown as adjacent components, wherein each may contribute to the overall structure of the plasma vessel 10. These segments 10a and 10b are joined at the interface 30. The interface 30 is depicted as a boundary where the two segments 10a, 10b meet, ensuring a secure and stable connection. As described elsewhere in here, the interface 30 may comprise an end portion of a first segment 10a and an end portion of a second segment 10b of respective neighboring stellarator modules 8.

In Fig. 5, the vacuum seal 36 has not yet been removed, such that the coupling element 40 is not yet visible, but the vacuum seal 36 is shown. As mentioned elsewhere herein, the vacuum seal 36 aids in maintaining the vacuum conditions within the plasma vessel 10, essentially preventing any leakage that could compromise the plasma confinement.

Additionally, the figure shows bellows 60 and 60a, which may be part of the interface 30.

The interface 30 is configured to allow for the sliding insertion of a coupling element 40 (shown in Fig. 5) and containment elements 50 (not shown in Fig. 5), as indicated by the alignment and positioning of the components and as described elsewhere herein. This sliding mechanism is likely facilitated by a form-fit manner, possibly utilizing a sliding rail system, which ensures precise and secure placement of the elements 40, 50 within the gap 34, 35 formed at the interface 30.

**Fig. 6** illustrates two exemplary steps during removal of a stellarator module 8. In each part of the figure, two adjacent plasma vessel segments 10a and 10b are depicted, which are part of the larger plasma vessel 10.

The left side of Fig. 6 shows a vacuum vessel coupling element 40, which is designed to be received in the gap 34, 35 (not indicated in this figure, but shown in **Fig. 4****)** between the plasma vessel segments 10a and 10b, specifically between first coupling surface 31 and second coupling surface 32 (shown in **Fig. 4****).** The coupling element 40 is essentially planar and is positioned to bridge the gap 34, 35, ensuring a secure and/or essentially vacuum-tight connection between the segments 10a, 10b.

On the right side of Fig. 6, a containment element 50 is depicted. This element is also designed to fit into the gap 34, 35 between plasma vessel segments 10a and 10b. The containment element 50 serves to contain contaminants, such as radioactive isotopes, within the vacuum vessel segments 10a, 10b. This may be important for safety and maintenance purposes, as it allows for essentially isolating and containing of contaminants, specifically hazardous materials during, e.g., maintenance of the stellarator 1. Optionally, one or two of the one or two containment elements 50 are configured to serve as a radiation shield, when received in the gap 34, 35.

Both the vacuum vessel coupling element 40 and the containment element 50 are shown to be essentially planar, aligning with the cross-section 11 (as shown in **Fig. 3****)** of the plasma vessel 10. This planar design facilitates the sliding insertion of these elements 40, 50 into the gap, ensuring a form-fit manner. The sliding mechanism, potentially utilizing a sliding rail with an essentially dovetail shape, allows for easy installation and removal of the elements, enhancing the modularity and maintainability of the stellarator.

However, as mentioned elsewhere, the interface surface 33 may comprise a curved portion, e.g., a convex and/or concave portion. In such an example, the vacuum vessel coupling element 40 and/or the containment elements 50 may also be curved, e.g., they/it may comprise convex and/or concave portions. In this manner, the vacuum vessel coupling element 40 may essentially correspond to the interface surface 33 when the latter one is curved. When the vacuum vessel coupling element 40 is curved, it may still preferably have a shape of an annulus.

The plasma vessel segments 10a and 10b are depicted with arrows indicating their exemplary alignment and connection points. Overall, the modular approach is advantageous for long-term maintenance and operational efficiency, as it minimizes downtime and facilitates the replacement of components.

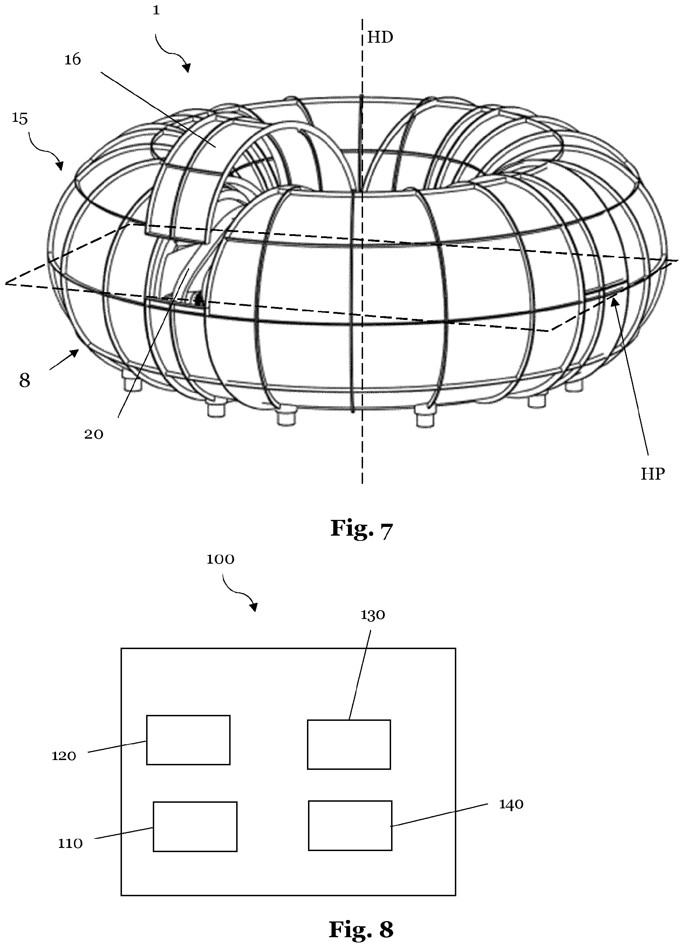

**Fig. 7** illustrates an embodiment of a stellarator 1. The stellarator comprises a plasma vessel 10 (not indicated in this figure), which is encased within a plurality of non-planar, superconducting coils 20 (one coil 20 is indicated as an example). These coils 20 are responsible for generating the magnetic field necessary to confine the plasma within the plasma vessel 10. One stellarator module 8 is exemplarily indicated in Fig. 7 (Fig. 1 shows this module 8 in greater detail). Each stellarator module 8 includes a plasma vessel segment 10a, 10b (not indicated in this figure) and a corresponding subset of the plurality of non-planar, superconducting coils 20.

The figure also shows cryostat segments 15, which are designed to insulate the superconducting coils 20. The cryostat segments 15 may ensure that the coils are maintained at temperatures below their critical temperature, thus achieving superconductivity. The cryostat segments 15 may be equipped with removable panels 16 (one of which is shown in a partially removed state). This may facilitate access to the corresponding plasma vessel segment for maintenance or replacement purposes.

The figure further delineates the horizontal plane HP and the vertical direction HD, which may provide an understanding the orientation and assembly of the stellarator modules 8. The plasma vessel interfaces 30 are positioned such that the stellarator modules 8 can be removed and replaced at least partially along the essentially horizontal plane HP. This configuration may simplify the maintenance and replacement process, ensuring that the modules 8 can be efficiently swapped without significant disruption to the overall system.

A stellarator waste management plant 100 is depicted in Fig. 8, along with a stellarator module removal and replacement system 110, a stellarator module inspection and disassembly unit 120, a stellarator module assembly unit 130, and a radioactive waste processing unit 140.

As regards the method for stellarator waste management described elsewhere herein, it is noted that this can be embedded in a computer program comprising instructions, which when executed on a computer cause a device/facility/apparatus to perform the method steps.

Whether described as method steps, computer program and/or means, the functions described herein may be implemented in hardware, software, firmware, and/or combinations thereof. If implemented in software/firmware, the functions may be stored on or transmitted as one or more instructions or code on a computer-readable medium. Computer-readable media include both computer storage media and communication media including any medium that facilitates transfer of a computer program from one place to another. A storage medium may be any available media that can be accessed by a general purpose or special purpose computer. By way of example, and not limitation, such computer-readable storage media can comprise RAM, ROM, EEPROM, FPGA, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. The stellarator module inspection and disassembly unit as described herein may also be implemented at least partially (e.g., as regards the inspection unit) in hardware, software, firmware, and/or combinations thereof, for example, by means of one or more general-purpose or special-purpose computers, and/or a general-purpose or special-purpose processors.

It is noted that the above examples may be combined with further aspects as described herein and details of the examples may also be omitted, as will be understood by the skilled person. The scope of protection is determined by the claims and is not limited by the embodiments disclosed in the above figures.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of the inventions disclosed herein.

While this disclosure has described certain embodiments and generally associated methods devices and or systems, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the independent and dependent claims.

### LIST OF REFERENCE NUMERALS

- 1: stellarator
- 8: module of the stellarator
- 10: plasma vessel
- 10a: plasma vessel segment
- 10b: plasma vessel segment
- 11: cross section of the plasma vessel
- 15: cryostat segment
- 16: panel
- 20: coils
- 30: plasma vessel interface
- 31: first coupling surface
- 32: second coupling surface
- 33: interface surface
- 34: toroidal coupling gap
- 35: planar coupling gap
- 36: vacuum seal
- 40: vacuum vessel coupling element
- 50: containment elements
- 60: expansion bellows
- 60a: expansion bellows
- 100: stellarator waste management plant
- 110: a stellarator module removal and replacement system
- 120: a stellarator module inspection and disassembly unit
- 130: a stellarator module assembly unit
- 140: a radioactive waste processing unit
- HD: height direction
- HP: horizontal plane
- TD: toroidal direction
- α: poloidal angle range

## Claims

1. A stellarator (1) comprising:
a plasma vessel (10);
a plurality of non-planar, superconducting coils (20) for generating a magnetic field for confining a plasma inside the plasma vessel;
a plurality of stellarator modules (8), each stellarator module comprising a plasma vessel segment (10a, 10b) and a corresponding subset of the plurality of non-planar, superconducting coils;
wherein neighboring stellarator modules are configured to be coupled to each other via a corresponding plasma vessel interface (30);
wherein the plasma vessel interfaces are positioned with respect to the plurality of non-planar, superconducting coils such that at least one of the stellarator modules can be replaced with a replacement stellarator module to restore the plasma vessel and the plurality of coils.

2. The stellarator of claim 1,
wherein one or more of the plasma vessel interfaces are each positioned along a respective interface surface (33), preferably defined by a toroidal coupling gap (34) formed between a respective first coupling surface (31) and a respective second coupling surface (32) of the one or more plasma vessel interfaces, more preferably defined by an essentially planar coupling gap (35) formed between a respective first coupling surface and a respective second coupling surface of the one or more plasma vessel interfaces; and, optionally,
wherein one or more of the plasma vessel interfaces are configured such that a vacuum vessel coupling element (40) and / or one or more containment elements (50) can be received in the gap.

3. The stellarator of claim 2, wherein one or more of the plasma vessel interfaces each comprises a replaceable vacuum seal (36), such as a re-weldable and/or re-brazerable vacuum seal, wherein the vacuum seal essentially surrounds the coupling element when received in the gap,
wherein, optionally, a separation between the vacuum seal and a coil that at least partially covers the vacuum seal is at least 20 cm, and/or at most 100 cm.

4. The stellarator of claim 2 or 3,
wherein one or more of the plasma vessel interfaces are positioned with respect to the plurality of coils such that each interface surface of the one or more plasma vessel interfaces does not intersect, in a poloidal angle range (a) of at least 60°, preferably at least 90°, and preferably at least 120° with the coils of the neighboring stellarator modules.

5. The stellarator of claim 4, wherein a separation between a pair of neighboring coils in the poloidal angle range (α) where the pair is not intersected by the interface surface is larger than or equal to a width of the gap.

6. The stellarator of any one of claims 2 to 5,
wherein the vacuum vessel coupling element is essentially planar and has preferably a shape of an annulus; and / or
wherein the vacuum vessel interface is configured such that upon removal of the coupling element from the gap, one or two containment elements can be received in the gap to essentially contain contaminants, such as radioactive isotopes within one or more vacuum vessel segments,
optionally, wherein one or two of the one or two containment elements are configured to serve as a radiation shield, when received in the gap.

7. The stellarator of any one of claims 2 to 6,
wherein one or more of the containment elements are essentially planar and have preferably a shape corresponding to a cross-section of the plasma vessel.

8. The stellarator of any one of claims 2 to 7,
wherein one or more of the plasma vessel interfaces are configured such that the one or more coupling elements and / or the one or more containment elements can be slidingly received in the gap in an essentially form fit manner, preferably via a sliding rail, preferably having an essentially dovetail shape.

9. The stellarator of any one of claims 2 to 8,
wherein one or more of the plasma vessel interfaces are positioned with respect to the plurality of coils such that the coupling elements can be received in the respective gap essentially without modifying the subset of coils of the respective stellarator modules.

10. The stellarator of any preceding claim,
wherein the plasma vessel interfaces are positioned with respect to the plurality of coils such that the at least one of the stellarator modules can be replaced by removing said at least one of the stellarator modules at least partially along an essentially horizontal plane (HP).

11. The stellarator of any preceding claim,
wherein one or more of the stellarator modules comprises one or more cryostat segments for insulating one or more of the plurality of coils, such that the subset of the plurality of coils can be cooled, preferably below a critical temperature for attaining superconductivity,
wherein, preferably, each of the plurality of cryostat segments (15) comprises removable panels (16) to facilitate access to the corresponding plasma vessel segment.

12. A method for stellarator waste management, the method comprising:
removing a stellarator module from a stellarator comprising a plurality of stellarator modules, preferably from a stellarator of any one of claims 1 to 11;
disassembling at least partially the removed stellarator module to obtain a plurality of disassembled stellarator module components;
identifying a first set of components to be reused, and a second set of components to be processed into radioactive waste;
reusing the first set of components to assemble a stellarator replacement module; and
processing the second set of components into radioactive waste.

13. The method of claim 12, wherein processing the second set of components into radioactive waste comprises:
separating one or more radioactive materials from the second set of components, optionally after reducing a volume of the second set of components; and
containerizing the separated radioactive materials in a radioactive waste storage container.

14. The method of claim 12 or 13, further comprising:
restoring the stellarator by replacing the removed stellarator module by the assembled stellarator module.

15. A stellarator waste management plant (100), comprising:
a stellarator module removal and replacement system (110) configured for removing a stellarator module from a stellarator comprising a plurality of stellarator modules, preferably from a stellarator of any one of claims 1 to 11;
a stellarator module inspection and disassembly unit (120) configured for disassembling at least partially the removed stellarator module to obtain a plurality of disassembled stellarator module components and for identifying a first set of components to be reused, and a second set of components to be processed into radioactive waste;
a stellarator module assembly unit (130) configured to reuse the first set of components for assembling a stellarator replacement module; and
a radioactive waste processing unit (140) for processing the second set of components into radioactive waste,
optionally, wherein the stellarator waste management plant is configured to carry out the steps of the method of any one of claims 12 to 14.
